# EUROPÄISCHE PATENTANMELDUNG

(11) **EP 1 905 553 A1**
(43) Veröffentlichungstag der Anmeldung: **02.04.2008**
(21) Anmeldenummer: 06121305.4
(22) Anmeldetag: 27.09.2006
(51) Int. Cl.: B25J 21/00

(54) **Arbeitskammer mit einem abdichtbaren Manipulatorarm**

(71) Anmelder: DISA Industrie AG, 8207 Schaffhausen (CH)
(72) Erfinder: Egli, Roland, 9200, Gossau (CH); Hügli, Wilfried, 8222 Beringen (CH); Vlah, Mihael, 8252 Schlatt (CH)
(74) Vertreter: Weiss, Wolfgang

(57) **Zusammenfassung**

Es wird eine Arbeitskammer (1) mit einem Manipulatorarm (3) vorgeschlagen, wobei die Arbeitskammer eine Wand (7) mit einer Durchführungsöffnung (6) zur Durchführung des Manipulatorarmes in die Arbeitskammer aufweist, und wobei eine Dichtungseinrichtung (11) zur Abdichtung der Durchführungsöffnung (6) vorgesehen ist, wobei die Dichtungseinrichtung (11) lösbar mit der Wand (7) der Arbeitskammer (1) verbunden angeordnet ist und wobei der Manipulatorarm (3) um seine Armachse X drehbar mit der Dichtungseinrichtung (11) verbunden angeordnet ist.

## Beschreibung

Die Erfindung bezieht sich auf eine Arbeitskammer mit einem Manipulatorarm, wobei die Arbeitskammer eine Wand mit einer Durchführungsöffnung zur Durchführung des Manipulatorarmes in die Arbeitskammer aufweist, und wobei ein Dichtungselement zur Abdichtung der Durchführungsöffnung vorgesehen ist.

Gussformteile, beispielsweise aus Metall oder Kunststoff, können nach der Entnahme aus der Giessform an den Innen- und Aussenflächen Verunreinigungen oder Unebenheiten aufweisen, die entfernt werden müssen. Die Oberflächen können auch anderen Nachbehandlungen, beispielsweise Verdichten oder Härten, unterworfen werden. Eine bekannte Methode ist das Abstrahlen der Oberflächen mit Feststoffpartikeln, die mit hoher Geschwindigkeit und somit hoher kinetischer Energie auf die Oberfläche gebracht werden. Damit das Strahlmittel nicht verloren geht, werden häufig geschlossene Strahlkammersysteme mit Strahlmittelrückführung und Aufbereitung eingesetzt. Um die zu bearbeitenden Gussformteile in die Strahlkammer zu bringen und daraus zu entnehmen, ist eine abdichtbare Öffnung notwendig.

Aus der DE 20 2004 006 813 U1 ist eine gattungsgemässe Abdichtungsvorrichtung zur Abdichtung einer Strahlkammer bekannt. Eine ringförmige flexible Manschette weist am inneren Rand und am äusseren Rand Ringe auf. Der äussere Ring ist drehbar verbunden mit der Wand der Strahlkammer und der innere Ring ist lösbar und verriegelbar mit dem Greifarm eines Manipulators oder Roboters verbunden. Während des Strahlbetriebes muss die Manschette an ihrem äusseren Umfang drehbar und dichtend mit der Kammerwand verbunden bleiben. Vor allem bei grösseren Öffnungen ist diese komplexe Aufgabe schwer zu lösen.

Ausgehend von diesem Stand der Technik ist es Aufgabe der Erfindung, eine Arbeitskammer mit einem Manipulatorarm anzugeben, die möglichst einfach abgedichtet werden kann, die eine möglichst kleine Dichtungsfläche aufweist und die Bearbeitung möglichst grosser Gussformteilen zulässt.

Diese Aufgabe wird gelöst durch eine Arbeitskammer mit einem Manipulatorarm, wobei die Arbeitskammer eine Wand mit einer Durchführungsöffnung zur Durchführung des Manipulatorarmes in die Arbeitskammer aufweist, und wobei eine Dichtungseinrichtung zur Abdichtung der Durchführungsöffnung vorgesehen ist, wobei die Dichtungseinrichtung lösbar mit der Wand der Arbeitskammer verbunden angeordnet ist und wobei der Manipulatorarm um seine Armachse drehbar mit der Dichtungseinrichtung verbunden angeordnet ist.

Bevorzugte Weiterbildungen der Erfindung ergeben sich aus den abhängigen Ansprüchen.

Es ist von Vorteil, dass die Dichtflächen zwischen dem beweglichen Manipulatorarm und der Wand der Strahlkammer möglichst klein gehalten werden können. Dies wird dadurch erreicht, dass die Dichtungseinrichtung einen radial innen liegend angeordneten Lagerring zur Lagerung des Manipulatorarmes aufweist. Dies wird auch dadurch erreicht, dass die Dichtungseinrichtung einen radial aussen liegend angeordneten Befestigungsring zur lösbaren Befestigung des Manipulatorarmes in die Durchgangsöffnung aufweist.

Es ist auch von Vorteil, dass die Einrichtung möglichst wenig bewegliche Teile aufweist. Dies wird dadurch erreicht, dass die Dichtungseinrichtung mindestens drei mit dem Lagerring verbundene Speichen aufweist. Dies wird weiter auch dadurch erreicht, dass die Enden der Speichen auf der der Arbeitskammer zugewandten Seite des Befestigungsringes aufliegend ausgebildet sind.

Der Kerngedanke der Erfindung ist eine Strahlkammer, in die möglichst grosse Gussformteile eingeführt und auf der gesamten Oberfläche bearbeitet werden können und wobei die Dichtungsflächen möglichst klein gehalten werden. Die Dichtung und die Lagerung des Manipulatorarmes erfolgt möglichst nahe bei der Achse des Manipulatorarmes statt am Rand der Dichtungseinrichtung. Damit auch grosse Werkstücke bearbeitet werden können, wird die Dichtungseinrichtung zusammen mit dem Roboterarm von der Strahlkammerwand gelöst um das Werkstück ein- und auszuführen.

Ein Ausführungsbeispiel der Erfindung wird anhand der Figuren beschrieben. Es zeigen:
Figur 1 eine perspektivische Sicht auf eine erfindungsgemässe Arbeitskammer mit einem Manipulatorarm,
Figur 2 eine Sicht von vorne auf die Arbeitskammer von Figur 1,
Figur 3 einen Schnitt durch die Arbeitskammer und den Manipulatorarm entlang der Linie A-A von Figur 2,
Figur 4 eine Vergrösserung eines Teilbereiches aus Figur 3 und
Figur 5 eine perspektivische Sicht auf den Manipulatorarm von Figur 1.

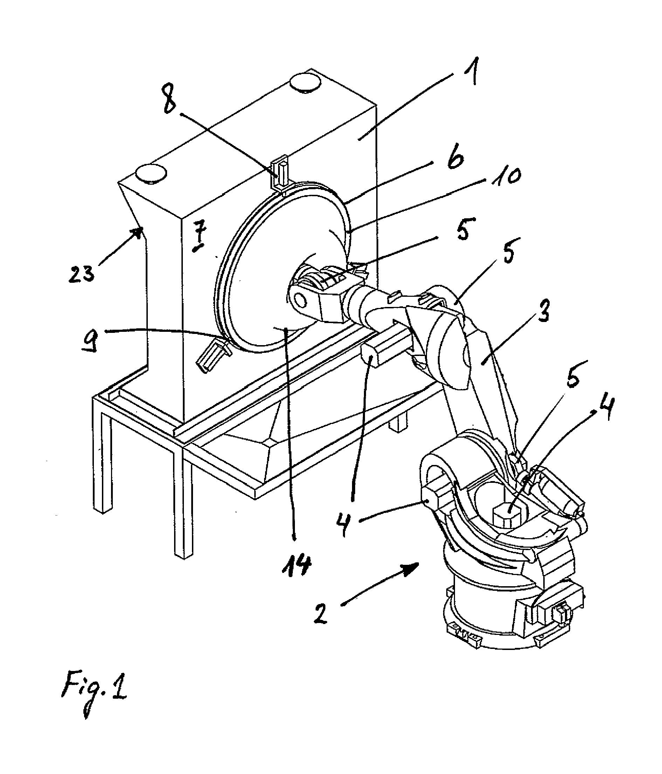

In Figur 1 ist schematisch eine Arbeitskammer, hier eine Strahlkammer 1 zum Abstrahlen von Gussformteilen mittels Festkörperteilchen, und einen Roboter 2 mit einem Manipulatorarm 3 in der Perspektive dargestellt. Der Roboter 2 weist verschiedene Motoren 4 auf, die die Bewegungen in verschiedenen Richtungen steuern. Die Bewegungen können Translations- oder Rotationsbewegungen sein. Hierzu sind einzelne Motoren 4 an Gelenken 5 des Manipulatorarmes 3 ersichtlich. Die Strahlkammer 1 ist im Wesentlichen ein abschliessbarer Raum, in dem das Strahlmittel, beispielsweise Hartmetallteilchen, Sandkörner oder Eispartikel, auf das zu bearbeitende Gussformteil, oder ein anderes Werkstück, gestrahlt oder geschleudert wird. Zur Strahlkammer 1 gehören weiter Zufuhrleitungen, Sammeleinrichtungen, Trenneinrichtungen und Fördervorrichtungen, die hier nicht abgebildet sind. Der Roboter 2 mit dem Manipulatorarm 3 wird von einem Computer gesteuert. Der Manipulatorarm 3 bringt das Gussformteil in die Strahlkammer 1 und hält es in der richtigen Lage in dem Strahlmittelstrahl. Die Strahlkammer 1 weist eine Durchführungsöffnung 6 auf, durch die das Gussformteil in und aus der Strahlkammer 1 gebracht werden kann.

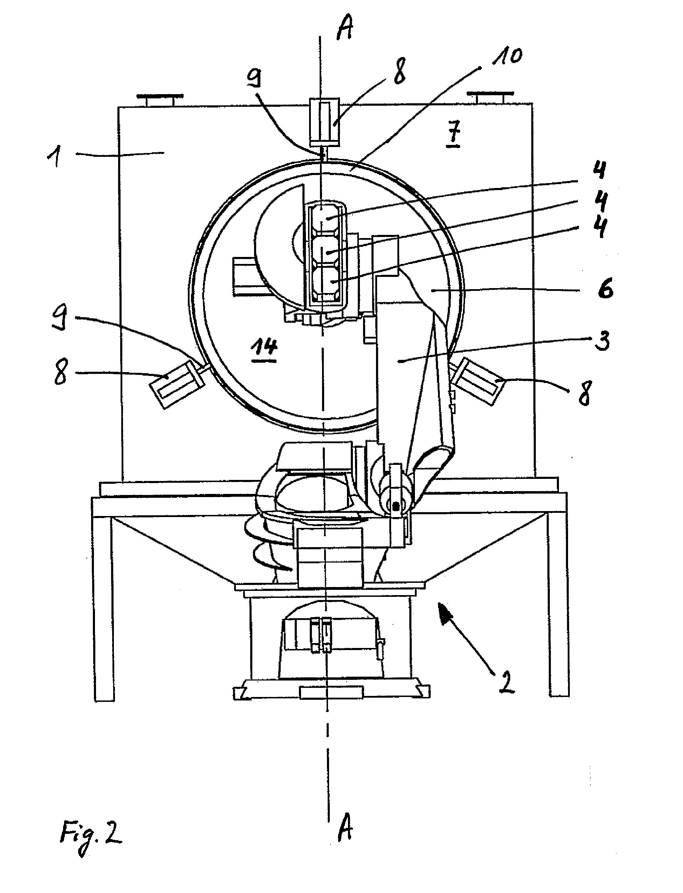

In Figur 2 sind die Strahlkammer 1 und der Manipulatorarm 3 in einer Ansicht senkrecht auf die Durchführungsöffnung 6 und eine Vorderwand 7 der Strahlkammer 1 dargestellt. An der Vorderwand 7 sind hier beispielsweise drei Verriegelungsvorrichtungen 8 benachbart zur Durchführungsöffnung 6 dargestellt. Die Verriegelungsvorrichtung 8 weist einen Kolben 9 auf, der radial nach Innen an die Aussenseite eines Befestigungsrings 10 angreift. Die Durchführungsöffnung 6 ist mit einer Dichtungseinrichtung 11 abdichtend verschliessbar. Der Manipulatorarm 3 verläuft durch die Dichtungseinrichtung 11 hindurch, ist in die Dichtungseinrichtung 11 drehbar um seine Achse X gelagert angeordnet und kann das Gussformteil in der Strahlkammer 11 an jeden gewünschten Ort bewegen. Der Manipulatorarm 3 bewegt sich dabei entsprechend der Freiheitsgrade des Armes. Beispielsweise kann der Manipulatorarm 3 schräg gestellt, geknickt und/oder um 360° gedreht werden.

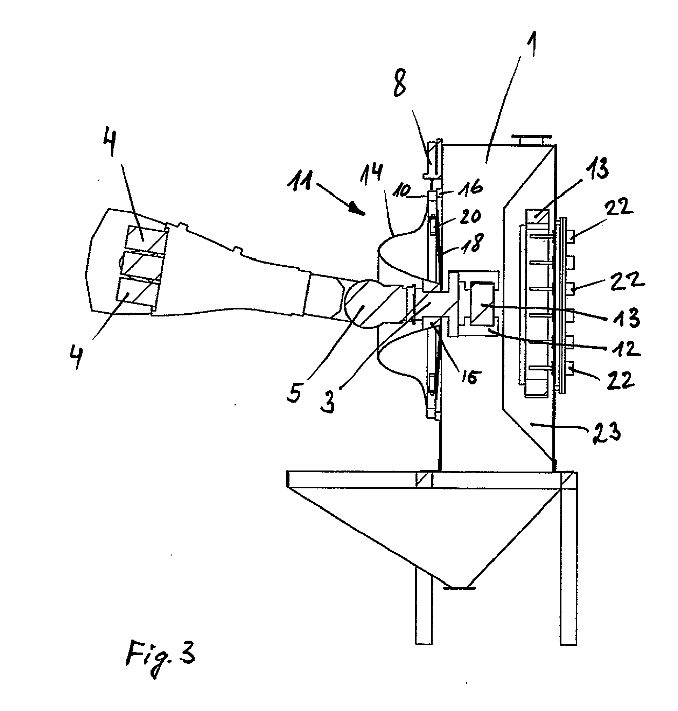

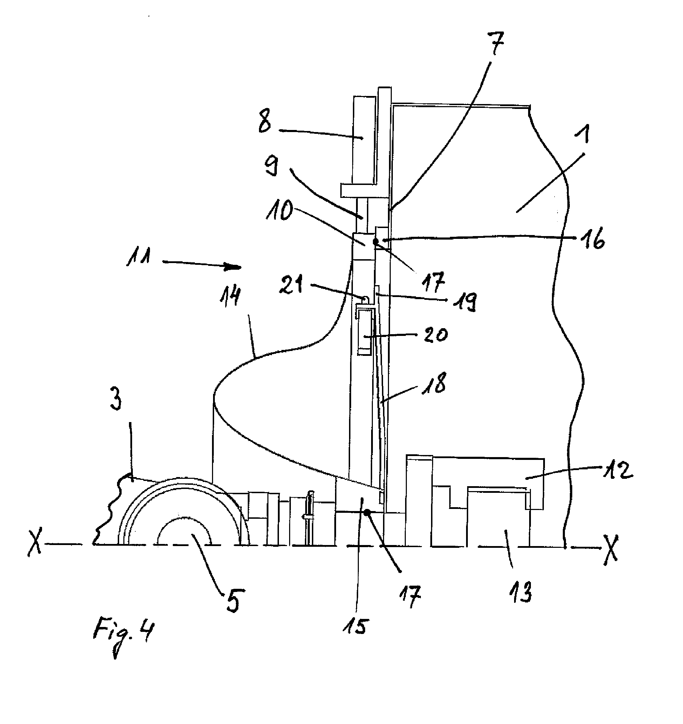

Die Dichtungseinrichtung 11 ist in Figur 3 und vergrössert in Figur 4 dargestellt. Vom Manipulatorarm 3 ist ein vorderes Gelenk 5 und einen Greifer 12 geschnitten entlang der Mittellinie X dargestellt. Im Greifer 12 ist schematisch ein Gussformteil 13 ersichtlich. Die Dichtungseinrichtung 11 umfasst im Wesentlichen eine flexible Membrane 14, die ringförmig zwischen einem inneren Lagerring 15 und dem äusseren Befestigungsring 10 ausgebildet ist. Die Vorderwand 7 der Strahlkammer 1 weist einen Verstärkungsring 16 auf. Zwischen dem Lagerring 15 und dem Manipulatorarm 3, sowie zwischen dem Befestigungsring 10 und dem Verstärkungsring 16 sind Dichtmittel 17 angeordnet. Die Dichtmittel 17 zwischen dem Lagerring 15 und dem Manipulatorarm 3 können mit der Lagerung des Roboterarmes 3 kombiniert werden. Der Befestigungsring 10 und der Verstärkungsring 16 können, statt kreisförmig auch dreieckig, rechteckig oder oval ausgebildet sein. Hiermit wird erreicht, dass die Durchführungsöffnung 6 und die Dichtungseinrichtung 11 in der Geometrie an den Abmessungen des Gussformteiles 13 angepasst werden können. Wenn in der Strahlkammer 1 immer identische Gussformteile 13 bearbeitet werden, kann die Form der Durchführungsöffnung 6 und der Dichtungseinrichtung 11 so klein als möglich ausgebildet werden.

Auf der Innenseite, das heisst auf der zur Strahlkammer 1 gerichteten Seite, der Dichtungseinrichtung 11 sind mit dem Lagerring 15 Speichen 18 fest verbunden. Die Speichen 18 erstrecken sich radial nach Aussen und haben eine Länge, die etwas grösser ist als der Innendurchmesser des Befestigungsringes 10. Das Ende 19 der Speiche 18 schlägt an auf die zur Strahlkammer 1 gerichteten Ringfläche des Befestigungsringes 10. Die Speichen 18 lassen jedoch einen Teil der Ringfläche frei, damit eine ringförmige Dichtfläche übrig bleibt. Benachbart zum Ende 19 sind weitere Verriegelungsvorrichtungen 20 mit weiteren Kolben 21 ersichtlich. Die mit den Speichen 19 verbundenen Verriegelungsvorrichtungen 20 wirken radial nach Aussen und greifen an dem Innendurchmesser des Befestigungsringes 10 an. Die Verriegelung, sowohl auf dem Aussen- als auch auf dem Innendurchmesser des Befestigungsringes 10 erfolgt in Ausnehmungen oder besser in Rillen, die in einem Umfangswinkel von 360° am gesamten Umfang des Befestigungsringes 10 ausgebildet ist. Mit den umlaufenden Rillen wird erreicht, dass die Kolben 9,21 an beliebigen Punkten am Umfang des Befestigungsringes 10 angreifen können. Eine einseitige Verformung wird verhindert und die Bewegung des Roboterarmes 3 erhält zusätzliche Freiheitsgrade. Im hier gezeigten Beispiel sind vier Speichen 18 ausgebildet.

Mindestens drei Speichen 18 sind erforderlich um eine sichere Befestigung des Roboterarmes 3 an dem Befestigungsring 10 zu gewährleisten. Die Speichen 18 sind nicht gleichmässig auf den Umfang des Befestigungsringes 10 verteilt angeordnet, sondern oberhalb und unterhalb der Achse des Manipulatorarmes 3 jeweils näher zu einander angeordnet. Hiermit wird erreicht, dass die Speichen 18, die sich während des Strahlbetriebes in der Strahlkammer 1 befinden, möglichst wenig angestrahlt werden und eine möglichst lange Standzeit aufweisen. Die Anordnung der Speichen 18 wird so gewählt, dass möglichst wenig Strahlkammervolumen für die Bewegung der Speichen 18 aufgewendet werden muss.

In Figur 3 sind zum besseren Verständnis der Arbeitsmethode zwei Gussformteile 13 dargestellt, obwohl sich jeweils nur ein Gussformteil 13 in die Strahlkammer 1 befindet. Entweder befindet sich der Greifer 12 mit dem Gussformteil 13 in der gezeigten Lage, oder der Roboterarm 3 bewegt sich, zusammen mit dem Lagerring 13 tiefer in die Strahlkammer 1, bis kurz vor der Rückwand der Strahlkammer 1.

An der Rückwand der Strahlkammer 1 sind im hier gezeigten Beispiel mehrere Reihen von jeweils sechs Düsen 22 eingebaut angeordnet. Ausser den sichtbaren Düsen 22, die in einer Richtung senkrecht aus der Rückwand auf das Gussformteil 13 gerichtet sind, können auch weitere Düsen 22 in einer Richtung parallel zur Rückwand der Strahlkammer 1 angeordnet sein. Hiermit wird erreicht, dass das Gussformteil 13 gleichzeitig auf möglichst vielen Seiten angestrahlt und bearbeitet werden kann. Ist das Gussformteil 13 beispielsweise ein Zylinderkopf mit sechs zylinderförmigen Vertiefungen, so können gleichzeitig die Vertiefungen auf der Innenseite als auch der Zylinderkopf selbst an bis zu vier Hauptflächen auf der Aussenseite bearbeitet werden. Die Strahlkammer 1 weist auf der Rückseite eine Nische 23 auf, in die die weiteren Düsen 22, die parallel zur Rückwand strahlen, angeordnet sind. Mit dieser Anordnung der Düsen 22 können in der Strahlkammer 1 die Gussformteile 13 präzise, gezielt und möglichst fein steuerbar bearbeitet werden.

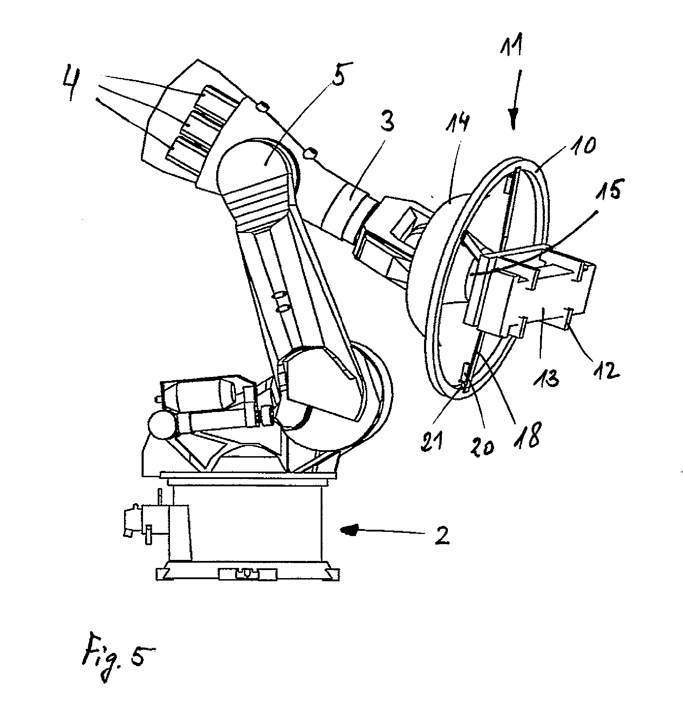

In Figur 5 ist der Roboter 2 mit dem Roboterarm 3 zusammen mit der Dichtungseinrichtung 11 und das Gussformteil 13, für sich alleine, ausserhalb der Strahlkammer 1, dargestellt. Die Dichtungseinrichtung 11 ist mittels des Lagerringes 15 lagernd verbunden mit dem Manipulatorarm 3. Das Gussformteil 13 wird in dem Greifer 12 fest gehalten. Der Befestigungsring 10 am äusseren Rand der ringförmigen flexiblen Membrane 14 wird von den Kolben 21 der Verriegelungsvorrichtungen 20 am Ende der Speichen 18 fest gehalten.

Das Abstrahlen eines Gussformteiles 13 läuft wie folgt ab. Das fertig bearbeitete Gussformteil 13, das vom Greifer 12 während der abstrahlenden Bearbeitung festgehalten wurde und im Bereich der Düsen 22 gehalten wurde, wird, nachdem die Strahlmittelzufuhr abgestellt wurde, in der Richtung der Achse X des Manipulatorarmes 3 von der Rückwand der Strahlkammer 1 zurück gezogen. Die Translationsbewegung in der Richtung der X-Achse dauert so lange, bis die Enden 19 der Speichen 18 auf dem Befestigungsring 10 aufliegen. Dann wird die Lage des Manipulatorarmes 3 mit dem Lagerring 15 der Dichtungseinrichtung 11 in Bezug auf den Befestigungsring 10 verriegelt, indem die Kolben 21 radial nach Aussen aus den Verriegelungsvorrichtungen 20 ausfahren. Anschliessend können die weiteren Verriegelungsvorrichtungen 8,9 an der Vorderwand 7 der Strahlkammer 1 gelöst werden. Jetzt kann der Manipulatorarm 3 des Roboters 2 zusammen mit dem Gussformteil 13 im Greifer 12 und zusammen mit der Dichtungseinrichtung 11 aus der Durchführungsöffnung 6 der Strahlkammer entfernt werden. In einer Übergabestation wird das so eben bearbeitete Gussformteil 13 gegen ein noch zu bearbeitendes Gussformteil 13 ausgetauscht. Der Manipulatorarm 3 fährt zusammen mit der Dichtungseinrichtung 11 soweit zurück in die Durchgangsöffnung 6, dass der Befestigungsring 10 auf dem Verstärkungsring 16 an der Vorderwand 7 der Strahlkammer 1 dichtend und plan aufliegt. Die Achse X des Manipulatorarmes 3 wird dabei zentriert in Bezug auf die Durchführungsöffnung 6 der Strahlkammer 1. Anschliessend wird der Befestigungsring 10 von den Verriegelungsvorrichtungen 8,9 zentriert und festgesetzt. Jetzt können die weiteren Verriegelungsvorrichtungen 20,21 gelöst werden und der Manipulatorarm 3 kann sich frei in der Strahlkammer 1 bewegen.

Das Gussformteil 13 wird auf den Düsen 22 ausgerichtet und der neue Bearbeitungsvorgang kann gestartet werden.

Mit der hier beschriebenen Vorrichtung können auch grosse Gussformteile 13, die so gross sind, dass sie gerade noch durch die Durchführungsöffnung 6 in die Strahlkammer 1 eingeführt werden können, bearbeitet werden. Weil die Fläche zwischen dem Verstärkungsring 16 und dem Befestigungsring 10 lediglich statisch, das heisst nicht drehbar, abgedichtet werden muss, ist hier auf einfache Art und Weise eine gute Dichtwirkung gewährleistet. Die Lagerung und Abdichtung des Manipulatorarmes 3 erfolgt im Bereich des Lagerringes 15, das heisst auf dem kleinst möglichen Durchmesser. Die Dichtflächen werden so klein wie möglich gehalten. Dadurch wird erreicht, dass die Belastung möglichst gering bleibt und dass eine möglichst lange Lebensdauer erreicht wird.

## Patentansprüche

1. Arbeitskammer (1) mit einem Manipulatorarm (3), wobei die Arbeitskammer eine Wand (7) mit einer Durchführungsöffnung (6) zur Durchführung des Manipulatorarmes in die Arbeitskammer aufweist, und wobei eine Dichtungseinrichtung (11) zur Abdichtung der Durchführungsöffnung (6) vorgesehen ist, **dadurch gekennzeichnet, dass** die Dichtungseinrichtung (11) lösbar mit der Wand (7) der Arbeitskammer (1) verbunden angeordnet ist und dass der Manipulatorarm (3) um seine Armachse X drehbar mit der Dichtungseinrichtung (11) verbunden angeordnet ist.

2. Arbeitskammer (1) mit einem Manipulatorarm (3) nach dem Anspruch 1, **dadurch gekennzeichnet, dass** der Manipulatorarm (3) den Freiheitsgraden des Manipulatorarmes (3) entsprechend frei beweglich mit der Dichtungseinrichtung (11) verbunden angeordnet ist.

3. Arbeitskammer (1) mit einem Manipulatorarm (3) nach mindestens einem der Ansprüche 1 oder 2, **dadurch gekennzeichnet, dass** die Dichtungseinrichtung (11) eine flexible Membrane (14) aufweist.

4. Arbeitskammer (1) mit einem Manipulatorarm (3) nach mindestens einem der Ansprüche 1 bis 3, **dadurch gekennzeichnet, dass** die flexible Membrane (14) am Aussenumfang kreisförmig ausgebildet ist.

5. Arbeitskammer (1) mit einem Manipulatorarm (3) nach mindestens einem der Ansprüche 1 bis 3, **dadurch gekennzeichnet, dass** die flexible Membrane (14) am Aussenrand dreieckig, rechteckig oder oval ausgebildet ist.

6. Arbeitskammer (1) mit einem Manipulatorarm (3) nach mindestens einem der Ansprüche 1 bis 5, **dadurch gekennzeichnet, dass** die Dichtungseinrichtung (11) einen radial innen liegend angeordneten Lagerring (15) zur Lagerung und Abdichtung des Manipulatorarmes (3) aufweist.

7. Arbeitskammer (1) mit einem Manipulatorarm (3) nach mindestens einem der Ansprüche 1 bis 6, **dadurch gekennzeichnet, dass** die Dichtungseinrichtung (11) einen radial aussen liegend angeordneten Befestigungsring (10) zur lösbaren Befestigung des Manipulatorarmes (3) in der Durchführungsöffnung (6) aufweist.

8. Arbeitskammer (1) mit einem Manipulatorarm (3) nach mindestens einem der Ansprüche 1 bis 7, **dadurch gekennzeichnet, dass** die Dichtungseinrichtung (11) mindestens drei mit dem Lagerring (15) verbundene Speichen (18) aufweist.

9. Arbeitskammer (1) mit einem Manipulatorarm (3) nach mindestens einem der Ansprüche 1 bis 8, **dadurch gekennzeichnet, dass** die Enden (19) der Speichen (18) auf der der Arbeitskammer (1) zugewandten Fläche des Befestigungsringes (10) aufliegend ausgebildet sind.

10. Arbeitskammer (1) mit einem Manipulatorarm (3) nach mindestens einem der Ansprüche 1 bis 9, **dadurch gekennzeichnet, dass** die Speichen (18) jeweils eine in radialer Richtung wirkende Verriegelungseinrichtung (20,21) zur Verriegelung mit dem Befestigungsring (10) aufweisen.

11. Arbeitskammer (1) mit einem Manipulatorarm (3) nach mindestens einem der Ansprüche 1 bis 10, **dadurch gekennzeichnet, dass** an die Wand (7) der Arbeitskammer (1) benachbart zur Durchführungsöffnung (6) weitere in radialer Richtung wirkende Verriegelungseinrichtungen (8,9) zur Verriegelung mit dem Befestigungsring (10) angeordnet sind.

12. Arbeitskammer (1) mit einem Manipulatorarm (3) nach mindestens einem der Ansprüche 1 bis 11, **dadurch gekennzeichnet, dass** die Arbeitskammer (1) als Strahlkammer (1) zum Abstrahlen von Gussformteilen (13) ausgebildet ist.

13. Arbeitskammer (1) mit einem Manipulatorarm (3) nach mindestens einem der Ansprüche 1 bis 12, **dadurch gekennzeichnet, dass** der Manipulatorarm (3) als Greifarm eines Roboters zur abstrahlenden Bearbeitung von Gussformteilen (13) in der Strahlkammer (1) ausgebildet ist.

14. Verfahren zur abstrahlenden Bearbeitung von Gussformteilen (13) in einer Arbeitskammer (1) mit einem Manipulatorarm (3) nach mindestens einem der Ansprüche 1 bis 13, mindestens umfassend die nach einander folgenden Schritte:
- axiales Ausfahren des Manipulatorarmes (3) mit dem fertig bearbeiteten Gussformteil (13) aus dem Strahlbereich der Arbeitskammer (1) bis die Enden (19) der Speichen (18) auf dem Befestigungsring (10) aufliegen,
- Feststellen des Lagerringes (15) der Dichtungseinrichtung (11) mit den Speichen (18) in Bezug auf dem Befestigungsring (10) durch radiales Hinausfahren von Verriegelungskolben (21) der innen liegenden Verriegelungseinrichtung (20),
- Lösen der Verbindung zwischen dem Befestigungsring (10) und der Wand (7) der Arbeitskammer (1) durch radiales Hineinfahren von weiteren Verriegelungskolben (9) der aussen liegenden Verriegelungseinrichtung (8),
- Ausfahren der Dichtungseinrichtung (11) und des Manipulatorarmes (3) mit dem fertig bearbeiteten Gussformteil (13) aus der Arbeitskammer (1) und Anfahren einer Übergabestation,
- Austauschen des fertig bearbeiteten Gussformteiles (13) gegen einem zu bearbeitenden Gussformteil in der Übergabestation und Anfahren zur Arbeitskammer (1),
- Einfahren des Manipulatorarmes (3) und der Dichtungseinrichtung (11) mit dem zu bearbeitenden Gussformteil (13) in die Arbeitskammer (1),
- Feststellen der Verbindung zwischen dem Befestigungsring (10) und der Wand (7) der Arbeitskammer (1) durch radiales Herausfahren der weiteren Verriegelungskolben (9) der aussen liegenden Verriegelungseinrichtung (8),
- Lösen des Lagerringes (15) der Dichtungseinrichtung (11) mit den Speichen (18) in Bezug auf dem Befestigungsring (10) durch radiales Hereinfahren der Verriegelungskolben (21) der innen liegenden Verriegelungseinrichtung (20),
- axiales Einfahren des Manipulatorarmes (3) mit dem zu bearbeitenden Gussformteil in den Strahlbereich der Arbeitskammer (1),
- Bearbeiten des Gussformteiles im Strahlbereich der Arbeitskammer (1) unter Drehbewegungen um die Achse X des Manipulatorarmes (3) und unter Translationsbewegungen in der Richtung der Achse X des Manipulatorarmes (3).
